# EUROPÄISCHE PATENTSCHRIFT

(11) **EP 1 236 170 B1**
(45) Veröffentlichungstag und Bekanntmachung des Hinweises auf die Patenterteilung: **21.05.2003**
(21) Anmeldenummer: 00962523.7
(22) Anmeldetag: 23.09.2000
(51) Int. Cl.: G06K 19/07, H02M 7/217

(54) **DRAHTLOSES ENERGIEÜBERTRAGUNGSSYSTEM MIT ERHÖHTER AUSGANGSSPANNUNG**
REMOTE ENERGY TRANSMISSION SYSTEM WITH ELEVATED OUTPUT VOLTAGE
SYSTEME DE TRANSMISSION D'ENERGIE SANS FIL A TENSION DE SORTIE ELEVEE

(30) Priorität: 05.12.1999 DE 19958265
(43) Veröffentlichungstag der Anmeldung: 04.09.2002
(73) Patentinhaber: IQ-Mobil Electronics GmbH, 82467 Garmisch-Partenkirchen (DE)
(72) Erfinder: BARTELS, Oliver, 85435 Erding (DE)
(74) Vertreter: Lang, Friedrich, Dipl.-Ing.
(86) Internationale Anmeldenummer: EP0009318
(87) Internationale Veröffentlichungsnummer: WO01041057

(56) Entgegenhaltungen:
- WO-A-97/08811
- DE-C- 19 702 768
- GB-A- 2 306 081

## Beschreibung

Der Erfindung liegt die Aufgabe zugrunde, Energie von einem Sender zu einem Empfänger zu übertragen, um dort den Betrieb weiterer Schaltungsteile oder Baugruppen auch ohne eigene Energieversorgung des Empfängers zu ermöglichen. Ein solches Erfordernis besteht beispielsweise bei Transpondern, die auf schnell rotierenden Teilen montiert sind und sich somit einer zuverlässigen externen Energieversorgung entziehen und bei denen anderseits aus Gründen der Wartungsarmut auf den Einsatz von Batterien verzichtet werden soll. Derartige Transponder werden beispielsweise zur elektronischen Kontrolle des Reifenluftdrucks in Kraftfahrzeugen eingesetzt, aber auch zur Identifizierung bewegter Güter oder als Artikelsicherungssystem zur Vermeidung von Ladendiebstahl.

Bisherige Systeme nutzen zur Energieübertragung induktive Methoden (Nahfeld) oder Funkwellen mit einem konstanten Träger. Derartige Systeme sind z.B. im RFID-Handbuch, Klaus Finkenzeller, Hanser Verlag ausgiebig beschrieben. Bei den induktiven Systemen ist nachteilig zu vermerken, dass die zur Erzeugung und Energieentnahme benötigten Spulen sehr viel Platz und Gewicht benötigen. Bei den Funksystemen wird aufgrund der definierten Impedanz des elektromagnetischen Feldes im freien Raum von ca. 377 Ohm (welche sich aus der Wurzel des Verhältnisses der Naturkonstanten mu0 zu epsilon0 ergibt) und des Abfalls der Leistungsdichte im Quadrat zur Entfernung eine relativ hohe Sendeleistung benötigt, um eine brauchbare Spannung am Detektor zu erhalten. Die maximal zulässige Sendeleistung ist jedoch im allgemeinen durch staatliche Vorgaben beschränkt. Eine Impedanzwandlung nach der Antenne ist zudem durch die dabei entstehenden Verluste - insbesondere bei höheren Frequenzen - nur begrenzt möglich. Andererseits ist die Verwendung höherer Frequenzen aufgrund der geringeren Antennengröße, der verbesserten Richtwirkung der Antennen und des breiteren verfügbaren Frequenzspektrums erwünscht.

Nun ist es bereits mit dem im Patent DE 19702768 desselben Erfinders beschriebenen Verfahren möglich, analoge Messwerte über größere Distanzen abzufragen, dieses Verfahren wird auch industriell genutzt. Allerdings beruht dieses Verfahren auf einer rein analogen Schaltung im Transponder, die eine wesentlich geringere Betriebsspannung als vergleichbare digitale Schaltungen benötigt.

Es wäre jedoch wünschenswert, die zum Betrieb digitaler Schaltungsteile benötigte höhere Betriebsspannung ebenfalls zu erhalten. Da diese Schaltungsteile im allgemeinen infolge der Verwendung der CMOS-Technologie nur sehr wenig Strom benötigen, liegt der Erfindung die Aufgabe zugrunde, bei gleicher bereitstehender Leistung die bereitgestellte Spannung auf Kosten des maximal verfügbaren Stroms zu erhöhen.

Derartige Baugruppen sind hinlänglich als Spannungswandler bekannt, allerdings funktionieren die verwendeten Schaltungen wiederum nur ab einer gewissen Mindestspannung, da ansonsten die Taktoszillatoren nicht anschwingen. Andererseits ist die Funkfrequenz als Taktfrequenz üblicherweise ungeeignet, da diese für diesen Zweck viel zu hoch ist.

Anspruch 1 zeigt in Oberbegriff die Merkmale soweit sie aus WO 97/08811 bekannt sind.

Das Problem wird erfindungsgemäß durch das in Patentanspruch 1 beschriebene System gelöst, dessen Funktion im folgenden erläutert wird:

Der Sender erzeugt ein pulsmoduliertes Hochfrequenzsignal. Die Pulsmodulationsfrequenz entspricht dabei der Taktfrequenz üblicher Gleichspannungswandler. Der Empfänger verfügt nun über mindestens einen antennengespeisten Gleichrichter mit Energiespeicher und einen ebenso gespeisten Detektor für den Wandlertakt. Somit stehen zwei Spannungen zur Verfügung: Eine kontinuierliche Gleichspanung auf niedrigem Niveau und eine Rechteckspannung. Letztere stellt nun den Takt für den Gleichspannungswandler dar, um die kontinuierliche Gleichspannung zu erhöhen.

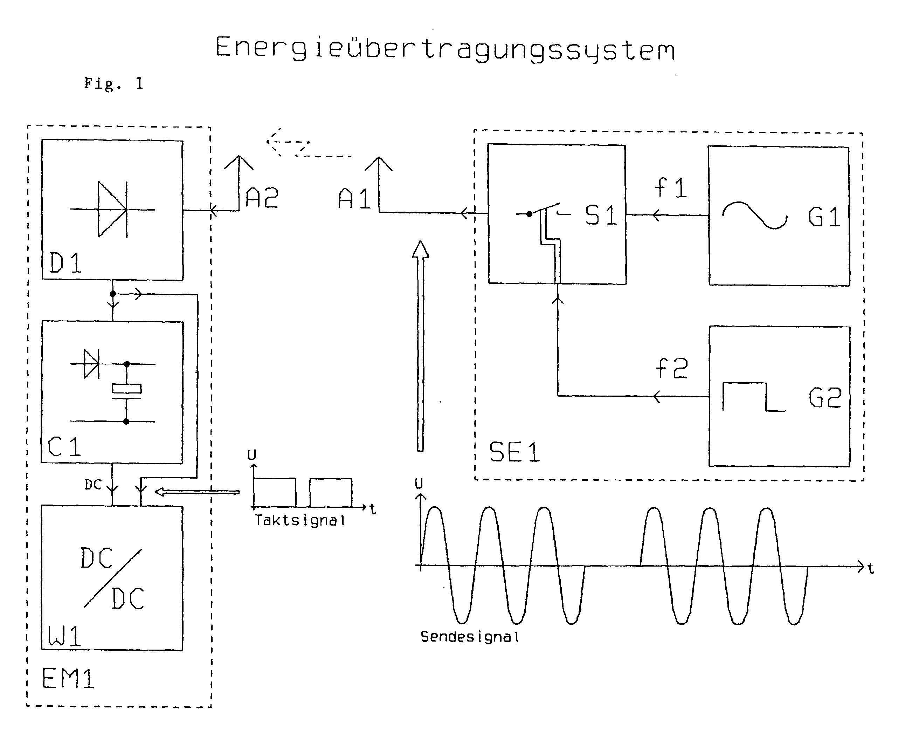

Im folgenden sei beispielhaft ein solches Energieübertragungssystem beschrieben: In Zeichnung 1 wird das vom Generator G1 des Senders SE1 erzeugte Sendesignal mit der Frequenz f1 über den Schalter S1 mit der Frequenz f2 pulsmoduliert. Diese Modulationsfrequenz f2 wird ihrerseits durch einen Rechteckgenerator G2 erzeugt. Das Sendesignal wird dann, gegebenenfalls nach zusätzlicher Verstärkung und Filterung, durch die Antenne A1 abgestrahlt.

Der Empfänger EM1 nimmt das Signal nun mit der Antenne A2 auf und führt es dem Detektor D1 zu. Am Ausgang dieses Detektors steht eine im Takt der Modulationsfrequenz f2 gepulste Gleichspannung zur Verfügung. In einer besonders vorteilhaften Ausgestaltung dieser Erfindung wird nun dasselbe Signal verwendet, um einerseits den Takt für den Gleichspannungswandler W1 bereitzustellen und andererseits dessen Versorgungsgleichspannung. Dies geschieht, indem das Ausgangssignal des Detektors mittels des über eine Diode entkoppelten Pufferkondensators C1 zwischengespeichert wird, sodass auch in den durch die Pulsmodulation bedingten Pausen des Sendesignals genügend Energie für den Wandler bereitsteht.

Um eine verbesserte Trennung der Versorgungsgleichspannung vom Takt zu erreichen, kann zusätzlich in den Pfad des Taktsignals einerseits ein Bandpass- oder Hochpassfilter eingefügt werden und andererseits die Versorgungsgleichspannung über ein zusätzliches Tiefpassfilter, insbesondere eine Drossel, entkoppelt werden. Durch diese Maßnahme werden auch Verluste durch die Schaitzeiten der Entkoppeldiode sowie unerwünschte Gegenkopplungseffekte, welche durch eine vom Wandlertakt abhängige Stromaufnahme des Wandlers entstehen können, reduziert oder vermieden.

Zusätzlich kann der Spannungspegel des niederfrequenten Wandlertakts durch eine Impedanzwandlung erhöht werden, hier bieten sich neben Übertragern insbesondere auch auf die Taktfrequenz abgestimmte Schwingkreise mit induktiver oder kapazitiver Ein- und Auskopplung an. Durch geeignete schaltungstechnische Maßnahmen, die als Mitkopplung bekannt sind, kann der Signalpegel weiterhin zusätzlich erhöht werden.

Sofern das Taktsignal durch die beschriebene Filterung von hinreichender Qualität ist, kann auf eine vollständige Abschaltung des Senders in den Pulspausen verzichtet werden, es wird lediglich mit reduzierter Leistung gesendet und somit die Pulsmodulation durch eine Amplitudenmodulation ersetzt. Hierdurch wird einerseits auch in den Pausen zusätzlich Energie übertragen, andererseits werden die Nachbarkanalstörungen im Funkspektrum reduziert.

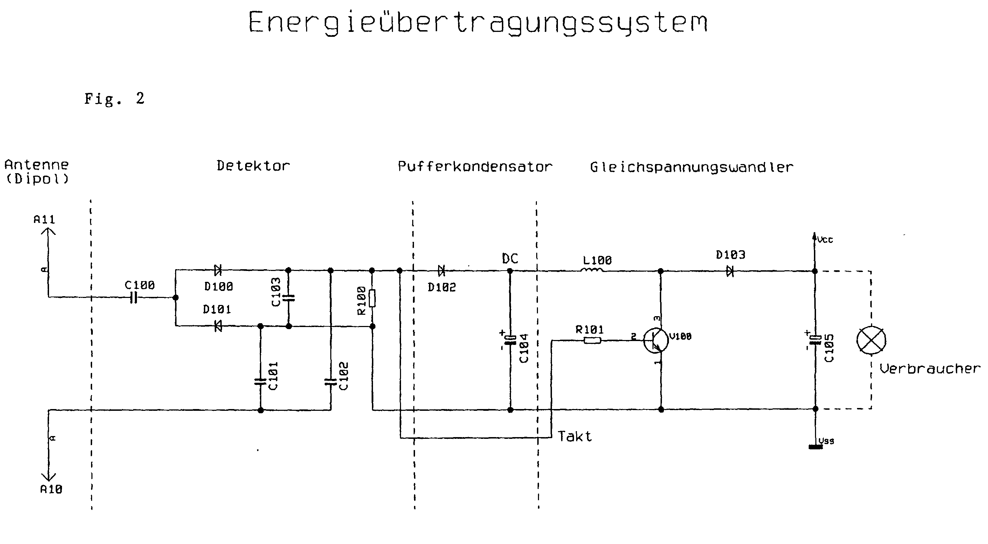

In Zeichnung 2 sei beispielhaft die Schaltung eines Empfängers dargestellt: Das Signal wird über den aus den Hälften A10 und A11 bestehenden Dipol als Empfangsantenne aufgenommen und unter Verwendung eines Detektors bestehend aus den Kondensatoren C100 bis C103, den Dioden D100 und D101 und dem Widerstand R100 demoduliert. Dabei wird durch die beiden Dioden bereits eine erste Spannungsverdopplung durch Ausnutzung der Spitze zu Spitze Spannung des empfangenen Signals vorgenommen. C100 dient dabei der vorteilhaften gleichspannungsmäßigen Entkopplung der Antenne von der Empfängermasse, mit R100 als zusätzlichem Lastwiderstand werden steilere Taktsignalflanken erreicht, welche für einen guten Wirkungsgrad des Wandlers unerläßlich sind.

Das Ausgangssignal des gemeinsamen Detektors wird nun mittels des mit der Diode D102 entkoppelten Pufferkondensators C104 in eine minimal pulsierende Gleichspannung umgewandelt, welche dem Gleichspannungswandler zur Verfügung gestellt wird.

Bei Vorliegen des hohen Signalpegels des Wandlertakts wird ein stetig steigender Strom durch die Induktivität L100 fließen, da sich der Schalttransistor V100 über das mittels R101 eingespeiste Taktsignal im geschlossenen Zustand befindet. Hierbei wird der Pufferkondensator C104 teilweise entladen. Idealerweise wird nun rechtzeitig vor der vollständigen Entladung von C104 das Taktsignal auf den niedrigen Signalpegel wechseln, zusätzlich unterstützt vom Lastwiderstand R100. Der Schalttransistor unterbricht dann schlagartig den Stromfluß durch die Induktivität L100, wodurch diese infolge Selbstinduktion am gemeinsamen Knotenpunkt mit D103 einen hohen positiven Spannungsimpuls erzeugt, der sich zudem zur verbleibenden Spannung des Kondensators C104 addiert. Dieser Impuls wird über die Diode D103 in einem weiteren Pufferkondensator C105 gespeichert. An diesem steht nun die erhöhte Ausgangsspannung zur Verfügung, welche beispielsweise zum Betrieb von Logikschaltkreisen benötigt wird.

Durch eine geeignete Rückkopplung kann der Wirkungsgrad des Wandlers zusätzlich erhöht werden, hier bietet sich insbesondere eine Rückführung des erzeugten Impulses beispielsweise über eine weitere Wicklung von L100 auf die Basis des Schalttransistors V100 an.

Es versteht sich von selbst, dass bedingt durch die hohe Steilheit des von der Induktivität L100 erzeugten Pulses die Dauer der Unterbrechung des Sendesignals infolge der Pulsmodulation sehr klein gehalten werden kann, sodass die übertragene Leistung gesteigert ist. Daher wird das vom Sender benutzte Rechteck-Modulationssignal ein hohes Tastverhältnis haben, dieser Schaltwandler Typ ist daher für die erfindungsgemäße Energieübertragung besonders gut geeignet.

Natürlich ist anstelle des Schalttransistors auch eine integrierte Lösung wie auch theoretisch die Verwendung beispielsweise von Halbleiterelementen denkbar, welche auf mindestens am Detektoroder Pufferkondensator anstehende Spannungen ein Durchbruchverhalten zeigen (Z-Dioden).

Daneben kann zu einem schnelleren Start des Wandlers die Frequenz und Pulsbreite des Taktsignals auch dynamisch vom Sender angepasst werden, insbesondere kann anfänglich ein reines Trägersignal zur erstmaligen Ladung des Pufferkondensators ausgestrahlt werden. Auch wäre beim Erreichen der benötigten Betriebsspannung eine Rückführung von Lastinformationen zum Sender denkbar, sofern ein hierfür geeigneter Rückkanal zur Verfügung steht.

In einer weiteren besonders vorteilhaften Ausgestaltung der Erfindung ist es auch möglich, nach dem Erreichen der für Logikschaltkreise notwendigen Betriebsspannung den weiteren Wandlertakt lokal im Empfänger zu erzeugen und damit auch die Wandlerausgangsspannung lastabhängig zu regeln. Diese Umschaltung kann über einen Rückkanal dem Sender beispielsweise über einen Befehl in einem digitalen Datenstrom mitgeteilt werden, wodurch dieser vom Pulsbetrieb in einen Dauerbetrieb umschalten kann, um zusätzliche Leistung zum Empfänger zu übertragen.

Für den Betrieb des Rückkanals eignet sich insbesondere eine gezielte Beeinflussung der Impedanz an der Antenne, die zu einem veränderten Reflexionsverhalten derselben führt und vom Sender mittels zusätzlicher Empfangsbaugruppen (Richtkoppler im Antennensignalpfad und daran angeschlossener Synchronempfänger) in der Art eines sich größenmäßig verändernden Radarobjektes wahrgenommen werden kann. Diese Art der Rückübertragung digitaler Datensequenzen ist in der Literatur auch als Backscatter-Modulation bekannt. Sinnvollerweise wird die Anforderung des Dauerbetriebs mit der Pulsmodulation synchronisiert, um eine optimale Reichweite des Rückkanals zu erhalten. Hierbei kann alternativ der Takt der Pulsmodulation auch als Datentakt oder Rechnertakt genutzt werden und lediglich das Tastverhältnis nach der Umschaltung weiter erhöht werden.

Dieser Rückkanal kann gleichzeitig auch zur Rückübertragung z.B. von Meßwerten oder Identifikationscodes verwendet werden, wodurch ein vollständiges Transpondersystem entsteht, dem diese Erfindung zu einer wesentlich erhöhten Reichweite bei vergeringerter Sendeleistung verhilft, und das zudem durch die Vermeidung des Einsatzes von Batterien äußerst langlebig und umweltfreundlich ist.

## Patentansprüche

1. System zur drahtlosen Energieübertragung, insbesondere System zur Speisung von Transpondern, bestehend aus mindestens einem Hochfrequenzsender (SE 1) und mindestens einem Hochfrequenzempfänger (EM 1), welche jeweils mit je mindestens einer Antenne (A1; A2) verbunden sind, wobei der Empfänger seine Betriebsgleichspannung unter Verwendung eines Gleichrichters oder Detektors aus der übertragenen Hochfrequenzleistung bezieht,
**dadurch gekennzeichnet,**
**dass** ein Hochfrequenzsignal des Hochfrequenzsenders mit mindestens einem für einen Gleichspannungswandler geeigneten Wandlertakt moduliert ist, dass der Empfänger über mindestens einen Detektor (D1) zur Demodulation des Wandlertakts verfügt, dass der Empfänger (EM 1) aus dem Hochfrequenzsignal unter Verwendung mindestens eines Gleichrichters oder Detektors (D1) - welcher auch identisch mit einem Detektor zur Demodulation des Wandlertakts sein kann - eine Betriebsgleichspannung für mindestens einen Gleichspannungswandler (W1) erzeugt und dass der Gleichspannungswandler (W1) unter Nutzung des übertragenen Wandlertakts eine andere Gleichspannung zum Betrieb weiterer Schaltungsteile oder sonstiger Verbraucher erzeugt.

2. System nach Anspruch 1,
**dadurch gekennzeichnet,**
**dass** die verwendete Modulation eine Pulsmodulation oder Amplitudenmodulation ist.

3. System nach Anspruch 1,
**dadurch gekennzeichnet,**
**dass** die Betriebsgleichspannung für den Gleichspannungswandler aus einem gemeinsamen Gleichrichter oder Detektor zusammen mit dem Wandlertakt abgeleitet wird, indem das gemeinsame Ausgangssignal mittels mindestens eines Tiefpassfilters oder mindestens einer Diodenentkopplung oder einer Kombination dieser Schaltungselemente aufbereitet und in einem Energiespeicher, insbesondere einem Pufferkondensator, zwischengespeichert wird.

4. System nach Anspruch 1,
**dadurch gekennzeichnet,**
**dass** der Wandlertakt für den Gleichspannungswandler aus einem gemeinsamen Gleichrichter oder Detektor zusammen mit der Betriebsgleichspannung für den Gleichspannungswandler abgeleitet wird, indem das gemeinsame Ausgangssignal mittels mindestens eines Hochpassfilters oder mindestens eines Bandpassfilters oder einer Kombination dieser Schaltungselemente aufbereitet wird.

5. System nach Anspruch 1,
**dadurch gekennzeichnet,**
**dass** der Spannungspegel des Wandlertakts durch eine Impedanzwandlung mittels Übertrager oder Resonanzschwingkreis erhöht wird.

6. System nach Anspruch 1,
**dadurch gekennzeichnet,**
**dass** als Gleichspannungswandler ein induktiver Schaltregler oder induktiver Schaltwandler Verwendung findet, der mittels mindestens eines vom Wandlertakt gesteuerten elektronischen Schalters, insbesondere Transistors, durch mindestens eine Induktivität einen geschalteten Strom fließen läßt und dadurch beim Abschaltvorgang unter Ausnutzung des Induktionsgesetzes eine hohe Spannung an der Induktivität erzeugt, welche entweder direkt, insbesondere unter Verwendung einer schnellen Schaltdiode, entnommen werden kann oder auch über eine weitere Induktivität ausgekoppelt werden kann.

7. System nach Anspruch 6,
**dadurch gekennzeichnet,**
**dass** durch eine Rückkopplung des an der Induktivität erzeugten Impulses am Gleichspannungswandler zum Eingang desselben der Wirkungsgrad zusätzlich erhöht wird.

8. System nach Anspruch 1,
**dadurch gekennzeichnet,**
**dass** nach dem erstmaligen Erzeugen einer erhöhten Gleichspannung zum Starten von Schaltungsteilen die Erzeugung des Wandlertaktes lokal im Empfänger unter Verwendung der gestarteten Schaltungsteile, insbesondere durch lokale Oszillatoren oder durch Ableitung aus digital codierten Informationen des Sendesignals, übernommen wird, wodurch die Funkfrequenz für Datenübertragungszwecke genutzt werden kann und wodurch weiterhin eine lokale lastabhängige Regelung der Wandlerausgangsspannung vorgenommen werden kann.

9. System nach Anspruch 8,
**dadurch gekennzeichnet,**
**dass** nach Übernahme der Erzeugung des Wandlertakts im Empfänger dies dem Sender über einen Rückkanal mitgeteilt wird, wodurch dieser in einen anderen Betriebszustand wechselt, insbesondere indem die Pulsmodulation oder Amplitudenmodulation durch ein kontinuierliches Sendesignal (Dauerstrich) oder ein Sendesignal mit einem anderen Tastverhältnis ersetzt wird.

10. System nach Anspruch 1 oder 9,
**dadurch gekennzeichnet,**
**dass** durch gezielt gesteuerte Halbleiterelemente an mindestens einer Antenne des Empfängers oder an mindestens einem Gleichrichter oder Detektor des Empfängers Impedanzänderungen vorgenommen werden, die zur Rückübertragung von digitalen Informationen vom Empfänger zum mit zusätzlichen Empfangsbaugruppen ausgerüsteten Sender durch Veränderung des Reflexions- und Absorptionsverhaltens der Empfängerantenne genutzt werden (Backscatter-Modulation).

## Claims

1. System for wireless power transmission, particularly a system for supplying transponders, comprising at least one high-frequency transmitter (SE 1) and at least one high-frequency receiver (EM 1), each of which is connected to at least one antenna (A1; A2), wherein the receiver obtains its DC operating voltage from the transmitted high-frequency output, using a rectifier or a detector,
**characterized in that**
a high frequency signal of the high-frequency transmitter is modulated with at least one converter clock suitable for a DC-DC converter, the receiver has at least one detector (D1) for demodulating the converter clock, the receiver (EM 1) generates a DC operating voltage for at least one DC-DC converter (W1) from the high frequency signal using at least one rectifier or detector (D1) - which may also be identical with a detector for demodulating the converter clock - and that the DC-DC converter (W1), using the transmitted converter clock, generates another DC voltage to operate further circuit elements or other consumers.

2. System as claimed in Claim 1,
**characterized in that**
the modulation used is pulse modulation or amplitude modulation.

3. System as claimed in Claim 1,
**characterized in that**
the DC operating voltage for the DC-DC converter is derived from a common rectifier or detector together with the converter clock **in that** the common output signal is processed by means of at least one low-pass filter or at least one diode decoupling or a combination of these circuit elements and is buffered in an energy storage element, particularly a buffer capacitor.

4. System as claimed in Claim 1,
**characterized in that**
the converter clock for the DC-DC converter is derived from a common rectifier or detector together with the DC operating voltage for the DC-DC converter **in that** the common output signal is processed by means of at least one high-pass filter or at least one band pass filter or a combination of these circuit elements.

5. System as claimed in Claim 1,
**characterized in that**
the voltage level of the converter clock is increased by impedance conversion by means of a transmitter or resonant circuit.

6. System as claimed in Claim 1,
**characterized in that**
an inductive switching controller or an inductive switching converter is used as DC-DC converter, which by means of at least one electronic switch controlled by a converter clock, particularly a transistor, allows a switched current to flow through at least one inductance and thereby generates a high voltage at the inductance making use of the law of induction during the disabling process, which voltage can either be picked off directly, particularly using a fast switching diode, or decoupled via an additional inductance.

7. System as claimed in Claim 6,
**characterized in that**
the efficiency is further enhanced through feedback of the pulse generated at the inductance at the DC-DC converter to the input thereof.

8. System as claimed in Claim 1,
**characterized in that**
after initially generating an increased DC voltage to start up circuit elements, converter clock generation is taken over locally in the receiver using the started circuit elements, particularly by local oscillators or by derivation from digitally encoded information of the transmitted signal, which makes it possible to use the radio frequency for data transmission purposes and further allows local load-dependent control of the converter output voltage.

9. System as claimed in Claim 8,
**characterized in that**,
after converter clock generation has been taken over in the receiver, this fact is communicated to the transmitter via a reverse channel, which causes the transmitter to switch to a different operating state, particularly **in that** pulse modulation or amplitude modulation is replaced by a continuous transmitted signal (continuous wave) or a transmitted signal with a different pulse duty ratio.

10. System as claimed in Claim 1 or 9,
**characterized in that**,
through specifically controlled semiconductor elements, impedance changes are made on at least one antenna of the receiver or at least one rectifier or detector of the receiver, which are used for feedback of digital information from the receiver to the transmitter, which is equipped with additional receiving components by changing the reflection and absorption behavior of the receiving antenna (backscatter modulation).

## Revendications

1. Système de transmission d'énergie sans fil, en particulier système d'alimentation d'émetteurs-récepteurs, composé d'au moins un émetteur haute fréquence (SE1) et d'au moins un récepteur haute fréquence (EM1), qui sont reliés chacun à au moins une antenne (A1 ; A2), le récepteur tirant sa tension continue de service de la puissance haute fréquence transmise à l'aide d'un redresseur ou d'un détecteur, ***caractérisé en ce qu'****un* signal haute fréquence de l'émetteur haute fréquence est modulé avec une horloge de convertisseur convenant à un convertisseur de tension continue, ***en ce que*** le récepteur dispose d'au moins un détecteur (D1) pour la démodulation de l'horloge de convertisseur, ***en ce que*** le récepteur (EM1) produit, à partir du signal haute fréquence, à l'aide d'un redresseur ou détecteur (D1) - qui peut être identique à un détecteur pour la démodulation de l'horloge de convertisseur -, une tension continue de service pour au moins un convertisseur de tension continue (W1), et ***en ce que*** le convertisseur de tension continue (W1) produit, à l'aide de l'horloge de convertisseur transmise, une autre tension continue pour faire fonctionner d'autres parties de circuit, ou même d'autres consommateurs.

2. Système selon la revendication 1, ***caractérisé en ce que*** la modulation utilisée est une modulation d'impulsion ou une modulation d'amplitude.

3. Système selon la revendication 1, ***caractérisé en ce que*** la tension continue de service pour le convertisseur de tension continue est dérivée d'un redresseur ou détecteur commun et de l'horloge de convertisseur, le signal de sortie commun étant préparé au moyen d'au moins un filtre passe-bas ou d'au moins un découplage à diodes, ou d'une combinaison de ces éléments de circuit, et étant stocké provisoirement dans un accumulateur d'énergie, en particulier un condensateur tampon.

4. Système selon la revendication 1, ***caractérisé en ce que*** l'horloge de convertisseur destinée au convertisseur de tension continue est dérivée d'un redresseur ou détecteur commun et de la tension continue de service destinée au convertisseur de tension continue, le signal de sortie commune étant préparé au moyen d'au moins un filtre passe-haut ou d'un filtre passe-bande ou d'une combinaison de ces éléments de circuit.

5. Système selon la revendication 1, ***caractérisé en ce que*** le niveau de tension de l'horloge de convertisseur est augmenté par une transformation d'impédance au moyen de transmetteurs ou d'un circuit résonant

6. Système selon la revendication 1, ***caractérisé en ce qu'***on utilise comme convertisseur de tension continue un régulateur inductif ou un convertisseur inductif qui, au moyen d'au moins un commutateur électronique commandé par l'horloge de convertisseur, en particulier d'un transistor, fait passer un courant commuté à travers au moins une inductance et produit ainsi une haute tension sur l'inductance lors de la procédure d'arrêt en raison de la loi d'induction, haute tension qui peut être prélevée directement, en particulier à l'aide d'une diode de commutation rapide, ou peut être découplée par l'intermédiaire d'une autre inductance.

7. Système selon la revendication 6, ***caractérisé en ce que* le** rendement est encore augmenté par réinjection de l'impulsion produite sur l'inductance dans l'entrée du convertisseur de tension continue.

8. Système selon la revendication 1, ***caractérisé en ce qu'***après la première production d'une tension continue augmentée afin de démarrer des composants, la production de l'horloge de convertisseur est effectuée localement dans le récepteur, en utilisant les composants démarrés, en particulier par des oscillateurs locaux ou à partir d'informations codées numériquement du signal d'émission, la fréquence radio pouvant ainsi être utilisée à des fins de transmission de données et, de plus, une régulation locale de la tension de sortie du convertisseur en fonction de la charge pouvant être effectuée.

9. Système selon la revendication 8, ***caractérisé en ce qu'***après la production de l'horloge de convertisseur dans le récepteur, elle est transmise à l'émetteur par un canal de retour, celui-ci passant alors dans un autre état de service, en particulier la modulation d'impulsion ou la modulation d'amplitude étant remplacée par un signal d'émission continue (trait continu) ou un signal d'émission présentant un autre rapport de détection.

10. Système selon la revendication 1 ou 9, ***caractérisé en ce que,*** par des éléments semiconducteurs commandés de manière ciblée sur au moins une antenne du récepteur ou sur au moins un convertisseur ou détecteur du récepteur, des modifications d'impédance ont lieu, qui sont utilisées pour le renvoi d'informations numériques du récepteur vers l'émetteur équipé de sous-ensembles récepteurs supplémentaires, par modification du comportement de réflexion et d'absorption de l'antenne réceptrice (modulation par rétrodiffusion).
